(19) Europäisches Patentamt
European Patent Office
Office européen des brevets

(11) **EP 0 749 875 B1**

(12) **EUROPÄISCHE PATENTSCHRIFT**

(45) Veröffentlichungstag und Bekanntmachung des Hinweises auf die Patenterteilung:
**20.10.1999 Patentblatt 1999/42**

(51) Int. Cl.$^6$: **B60R 22/46**, F01C 19/10, F16J 15/16

(21) Anmeldenummer: **96109946.2**

(22) Anmeldetag: **20.06.1996**

(54) **Dichteinrichtung am Kolben eines Kreiskolbenantriebs für Gurtstraffer**

Piston sealing arrangement for rotary actuator of a belt tensioner

Agencement d'étanchéité sur le piston d'un actionneur rotatif pour rétracteur de ceinture

(84) Benannte Vertragsstaaten:
**AT DE ES FR GB IT SE**

(30) Priorität: **22.06.1995 DE 29510123 U**

(43) Veröffentlichungstag der Anmeldung:
**27.12.1996 Patentblatt 1996/52**

(73) Patentinhaber: **FÖHL, Artur**
**73614 Schorndorf (DE)**

(72) Erfinder: **FÖHL, Artur**
**73614 Schorndorf (DE)**

(74) Vertreter:
**Degwert, Hartmut, Dipl.-Phys.**
**Prinz & Partner**
**Manzingerweg 7**
**81241 München (DE)**

(56) Entgegenhaltungen:
**DE-B- 1 257 482**      **DE-B- 1 292 973**
**DE-U- 9 415 157**

**Beschreibung**

Die Erfindung betrifft eine Dichteinrichtung am Kolben eines Kreiskolbenantriebs für Gurtstraffer.

Unter den Kreiskolbenmaschinen hat besonders eine Bauform mit dreizahnigem Kolben und zweizahnigem Stator, der sogenannte Wankel-Motor, technische Bedeutung erlangt. Die Gasdichtung am Kolben einer solchen Maschine ist problematisch. Die radiale Abdichtung erfolgt mittels Dichtleisten, die mit geringem Spiel in je eine Nut am Kolbenscheitel radial verschiebbar eingesetzt sind und durch eine flache Feder an die Laufbahn des Statorgehäuses angedrückt werden. Axial erfolgt die Abdichtung durch in die Kolbenstirnflächen eingelassene Dichtstreifen, die durch flache Federstreifen an die Seitenwand des Statorgehäuses angedrückt werden. Ein solches Dichtsystem stellt hohe Anforderungen an die Herstellungspräzision und ist daher sehr aufwendig.

Bei Verwendung einer Kreiskolbenmaschine als Drehantrieb für einen Gurtstraffer kann dieser seitlich an einen Gurtaufroller angesetzt werden. Die Antriebsenergie wird von mehreren pyrotechnischen Treibsätzen geliefert, die über den Umfang des Stators verteilt sind und nacheinander aktiviert werden. Zwar muß ein Strafferantrieb nur während einer äußerst kurzen Zeitspanne von wenigen Millisekunden arbeiten, um das Gurtband zu straffen, jedoch werden an die Zuverlässigkeit seiner Funktion sehr hohe Anforderungen gestellt. Die Verwendung einer Kreiskolbenmaschine als Strafferantrieb scheiterte bisher an der mangelnden Verfügbarkeit eines mit vertretbarem Aufwand herstellbaren Dichtsystems, das innerhalb eines großen Temperaturschwankungsbereichs und über lange Zeiträume von zehn Jahren und mehr zuverlässig abdichtet.

Aus der DE-B-1 257 482 ist eine Radialdichtung für Rotationskolben bekannt, die am Kolbenscheitel in Umfangsrichtung kippbar angebracht ist und zwei in Umfangsrichtung voneinander beabstandete Dichtflächen aufweist, von denen je nach Kipprichtung der Radialdichtung die eine oder die andere mit dem Kolbenscheitel dichtend in Eingriff kommt. Die Kippbewegung der Radialdichtung, die sich an ihrer in Umfangsrichtung äußersten Kante in einer entsprechenden Ausnehmung im Kolbenscheitel abstützt, kommt durch die Druckbeaufschlagung einer seiner Seitenflächen zustande. Infolge dieser Kippbewegung wird die Radialdichtung auf ihrer der Druckbeaufschlagung zugewandten Seite angehoben. Die Kippbewegung der Radialdichtung hat eine radiale Auswärtsverlagerung ihrer radial äußeren Dichtkante zur Folge, die dadurch gegen die Laufffläche am Gehäuse der Kreiskolbenmaschine angedrückt wird. Die Kraft, mit welcher die Dichtkante an die Laufffläche des Gehäuses andrückt, ist bei der bekannten Radialdichtung jedoch so hoch, daß aufgrund der dadurch hervorgerufenen hohen Reibung die Leistung der Kreiskolbenmaschine herabgesetzt wird. Bei einer als Gurt-straffer-Drehantrieb ausgebildeten Kreiskolben-maschine ist diese bekannte Radialdichtung nicht verwendbar, da sie die Kolbenbewegung zu stark behindert.

Durch die Erfindung wird eine Dichteinrichtung am Kolben eines Kreiskolbenantriebs zur Verfügung gestellt, die für eine kostengünstige Massenproduktion geeignet ist und eine gute Dichtwirkung aufweist, ohne daß zu hohe Reibungskräfte auftreten.

Die erfindungsgemäße Dichteinrichtung am Kolben eines Kreiskolbenantriebs für Gurtstraffer weist ein in Umfangsrichtung kippbeweglich an jedem Kolbenscheitel angebrachtes Dichtelement auf, das sich axial über die Breite des Kolbens erstreckt, mit seiner radial äußeren Dichtkante am Gehäuse des Kreiskolbenantriebs anliegt und auf seiner der Dichtkante gegenüberliegenden Seite eine Basisfläche aufweist. Die Dichteinrichtung ist erfindungsgemäß dadurch gekennzeichnet, daß das Dichtelement am Kolbenscheitel auf einen axial über diesen verlaufenden, die Basisfläche des Dichtelements teilenden sowie zwischen der Basisfläche und dem Kolbenscheitel abdichtenden Lagerelement gelagert ist. Durch die Aufteilung der Basisfläche wird nur ein Teil derselben vom Mediendruck beaufschlagt, so daß die radial nach außen gerichtete Kraft, welche die Dichtkante des Dichtelements gegen die Laufbahn im Gehäuse des Kreiskolbenantriebs andrückt, reduziert wird. Entsprechend werden auch die Reibungskräfte vermindert, welche die Kolbenbewegung hemmen.

Bei der bevorzugten Ausführungsform ist das Lagerelement durch einen zylindrischen Körper aus gummielastischem Material gebildet. Ein solcher Lagerkörper gewährleistet auf einfachste Weise sowohl die erforderliche Kippbeweglichkeit des Dichtelements als auch die Abdichtung zwischen seiner Basisfläche und dem Kolbenscheitel; darüber hinaus kann durch geeignete Einspannung des aus gummielastischem Material bestehenden Lagerkörpers eine radial auswärts gerichtete Kraft auf das Dichtelement ausgeübt werden, um dessen Dichtkante schon im Ruhezustand (ohne Mediendruck) gegen die Laufbahn im Gehäuse des Kreiskolbenantriebs anzudrücken.

Die radiale Kraft, mit der das Dichtelement durch den Mediendruck beaufschlagt wird, kann innerhalb eines weiten Bereiches im wesentlichen durch drei Parameter variiert werden: die Lage der Kippachse des Dichtelements, die Lage der durch das Lagerelement bewirkten Abdichtung zwischen Dichtelement und Kolbenscheitel sowie die in Umfangsrichtung gemessene Breite des Lagerelements, da die Basisfläche des Dichtelements um das Maß dieser Breite verkleinert ist.

Weitere vorteilhafte Ausführungsformen der Dichteinrichtung ergeben sich aus den Unteransprüchen und aus der nachfolgenden Beschreibung mehrerer Ausführungsformen unter Bezugnahme auf die Zeichnung.

## Kurze Beschreibung der Zeichnungen

In der Zeichnung zeigen:

Fig. 1 schematisch einen Querschnitt einer ersten Ausführungsform der Dichteinrichtung in drei verschiedenen Zuständen;

Fig. 2 eine Schnittansicht analog Fig. 1, jedoch einer zweiten Ausführungsform der Dichteinrichtung;

Fig. 3 eine Schnittansicht analog den Figuren 1 und 2, jedoch einer dritten Ausführungsform;

Fig. 4 eine schematische Seitenansicht der Dichteinrichtung gemäß einer weiteren Ausführungsform;

Fig. 5 eine Perspektivansicht der Dichteinrichtung nach Fig. 4;

Fig. 6 eine schematische Seitenansicht einer weiteren Ausführungsform;

Fig. 7 eine Perspektivansicht der Ausführungsform nach Fig. 6;

Fig. 8 eine Profildichtung in perspektivischer Teilansicht;

Fig. 9 eine Schnittansicht einer Profildichtung;

Fig. 10 eine schematische Seitenansicht einer weiteren Ausführungsform;

Fig. 11 eine Perspektivansicht der Dichteinrichtung nach Fig. 10;

Fig. 12 eine Perspektivansicht einer weiteren Profildichtung, wie sie bei den Ausführungsformen nach den Figuren 4, 5, 10 und 11 verwendet werden kann;

Fig. 13 einen Kolben mit drei erfindungsgemäßen Dichtelementen nach den Figuren 4 und 5, wie er bei einer Kreiskolbenmaschine zur Verwendung in einem Gurtstraffer-Drehantrieb verwendet wird;

Fig. 14 eine schematische Seitenansicht einer Dichteinrichtung nach dem Stand der Technik mit eingezeichneten Maßen und Kräften zur überschlägigen Kraftberechnung; und

Fig. 15 eine schematische Seitenansicht des Dichtelements nach Fig. 2 ohne Feder, mit eingezeichneten Maßen und Kräften zur überschlägigen Kraftberechnung.

Von dem Gehäuse eines Kreiskolbenantriebs für einen Gurtstraffer ist in den Zeichnungen jeweils nur ein Wandungsteil 10 gezeigt, an dessen Innenseite eine Lauffläche 12 gebildet ist. Auch von dem Kolben 14 ist jeweils nur ein Bruchteil gezeigt. Bei dem Kreiskolbenantrieb handelt es sich um eine Bauform mit exzentrisch gelagertem Kolben, der in einem feststehenden Gehäuse umläuft, indem er sich um seinen Mittelpunkt dreht und dieser Mittelpunkt zugleich eine Kreisbewegung ausführt. Der Kolben hat im Querschnitt die Form eines gleichseitigen Bogendreiecks. Jede Ecke des Bogendreiecks bildet einen Kolbenscheitel. In den Zeichnungen ist von den Kolben 14 jeweils ein Scheitel gezeigt.

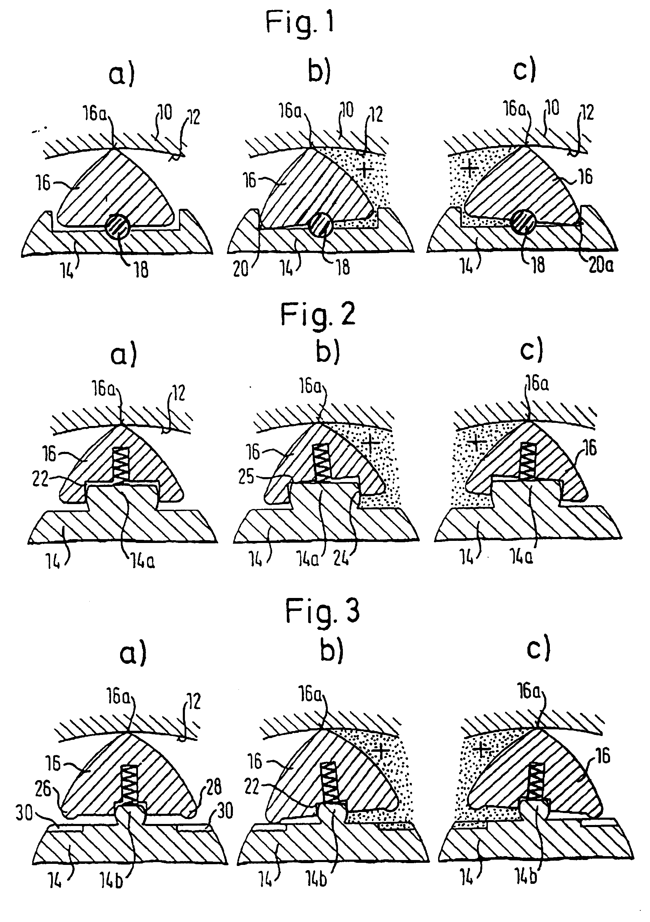

Bei der Ausführungsform nach Fig. 1 ist in einer rechteckförmigen Ausnehmung am Kolbenscheitel ein Dichtelement 16 eingesetzt, das sich über die gesamte Breite des Kolbens 14 erstreckt. Das Dichtelement 16 weist an seinem radial äußeren Ende eine Dichtkante 16a auf, die an der Laufbahn 12 des Gehäuses 10 anliegt und dort abdichtet. Beiderseits dieser Dichtkante 16a weist das Dichtelement 16 eine ballig ausgestaltete Seitenfläche auf. Die der Dichtkante 16a gegenüberliegende Basisfläche ist bei dieser Ausführungsform flach, jedoch mit einer axial verlaufenden, im Querschnitt annähernd halbkreisförmigen Nut, in der ein zylindrischer Lagerkörper 18 aus gummielastischem Material angeordnet ist. Der Lagerkörper 18 greift in eine entsprechende Nut in der Basisfläche des Dichtelements 16, das mittels des Lagerkörpers 18 am Scheitel des Kolbens 14 abgestützt ist. Der zylindrische Lagerkörper 18 dichtet die beiden durch das Dichtelement 16 getrennten Kammern zwischen der Basisfläche und dem Kolbenscheitel ab und teilt die Basisfläche in zwei gleich große Flächen, da er etwa in der Mitte zwischen den in Umfangsrichtung äußeren Seitenrändern der Basisfläche gelagert ist. Durch den Lagerkörper 18 ist das Dichtelement 16 radial auswärts belastet, so daß die Dichtkante 16a gegen die Laufbahn 12 gedrückt wird.

Fig. 1a zeigt den Ruhezustand des Dichtelements 16 ohne Druckbeaufschlagung.

Bei dem in Fig. 1b gezeigten Zustand wird die in der Zeichnung rechts gelegene Seitenfläche des Dichtelements 16 druckbeaufschlagt. Durch die Druckbeaufschlagung wird das kippbewegliche Dichtelement 16 um den Lagerkörper 18 in der Zeichnung nach links gekippt, bis seine am Übergang zwischen Basisfläche und Seitenfläche gebildete Stützkante 20 am Boden der Ausnehmung des Kolbenscheitels anstößt und dort zusätzlich abdichtet. Die der Stützkante 20 gegenüberliegende Ecke des Dichtelements 16 ist geringfügig vom Kolbenscheitel abgehoben, so daß die rechte Teilfläche der Basisfläche des Dichtelements 16 druckbeaufschlagt wird. Die Druckbeaufschlagung dieser Teilfläche und einer Seitenfläche des Dichtelements 16 hat zur Folge, daß die Dichtkante 16a mit ausreichend hoher Kraft an die Laufbahn 12 angepreßt wird. Bei dieser Ausführungsform, bei der das Lagerelement des Dichtelements 16 als Lagerkörper 18 ausgebildet ist, ist die Kippstellung des Dichtelements 16 einerseits durch den Lagerkörper 18, der eine Kippachse festlegt, und andererseits durch die Abstützung der als Stützkante 20, 20a ausgebildeten Seitenränder der Basisfläche am Kolbenscheitel definiert.

Fig. 1c zeigt den gleichen Vorgang wie Fig. 1a, jedoch bei Druckbeaufschlagung der gegenüberliegenden Seitenfläche des Dichtelements 16. Man sieht, daß sich das Dichtelement 16 nun an der gegenüberliegenden Ecke 20a auf dem Kolbenscheitel abstützt und dort zusätzlich abdichtet.

Bei der Ausführungsform nach Fig. 2 ist am Kolbenscheitel eine Leiste 14a angeformt, die sich über die Breite des Kolbens 14 erstreckt. Diese Leiste 14a ist mit ballig verrundeten Seitenflächen ausgebildet. In der Basisfläche des Dichtelements 16 ist eine Ausnehmung 22 angebracht, in welche die Leiste 14a hineinragt. Die Seitenflächen dieser Ausnehmung 22 können sich an den Seitenflächen der Leiste 14a abstützen und an diesen abdichten. Eine Bohrung oder Ausnehmung in der Basisfläche dient zur Aufnahme einer Feder, die sich an der radial nach außen gerichteten ebenen Fläche der Leiste 14a abstützt und die Dichtkante 16a radial auswärts belastet.

Fig. 2a zeigt wiederum den Ruhezustand, während die Figuren 2b und 2c den Zustand mit Druckbeaufschlagung von der einen bzw. anderen Seite zeigen. Auch bei dieser Ausführungsform ist das Dichtelement 16 kippbeweglich am Kolbenscheitel angebracht. Bei der durch Druckbeaufschlagung einer Seitenfläche des Dichtelements 16 erfolgenden Kippbewegung wird jedoch nur ein relativ kleiner Teil der Basisfläche des Dichtelements 16 druckbeaufschlagt, da die Abdichtung an der druckseitigen Seitenfläche der Ausnehmung 22 und der benachbarten Seitenfläche der Leiste 14a entlang einer mit 24 bezeichneten Linie erfolgt. Die Abstützung des Dichtelements 16 im Sinne eines Schwenklagers erfolgt entlang einer mit 25 bezeichneten Stützlinie. Bei dieser Ausführungsform ist die durch den Mediendruck bewirkte Radialkraft, mit der die Dichtkante 16a an die Laufbahn 12 angedrückt wird, wesentlich kleiner als bei der Ausführungsform nach Fig. 1, da ein noch kleiner Teil der Basisfläche des Dichtelements 16 druckbeaufschlagt wird. Die radiale Dichtkraft wird überwiegend durch die Druckbeaufschlagung der Seitenfläche des Dichtelements 16 erzeugt, die bestrebt ist, dieses um die Stützlinie 25 zu verschwenken. Man sieht in Fig. 2c, daß bei Druckbeaufschlagung der gegenüberliegenden Seitenfläche des Dichtelements 16 dieses in die entgegengesetzte Kippstellung gelangt, wobei die gleichen Wirkungen auftreten. In dieser Ausführungsform definiert die Leiste 14a die Kippstellung des Dichtelements 16. Das Dichtelement 16 weist zwei in Umfangsrichtung beabstandete Dichtflächen, nämlich die Seitenflächen der Ausnehmung 22 auf, von denen je nach Kipprichtung des Dichtelements 16 in der Kippstellung die eine oder die andere mit entsprechenden Dichtflächen der Leiste 14a, nämlich deren Seitenflächen, in Eingriff kommt.

Bei der Ausführungsform nach Fig. 3 ist die Leiste 14b am Scheitel des Kolbens 14 im Vergleich zu Fig. 2 schmal ausgebildet. Entsprechend groß ist der Anteil der Basisfläche des Dichtelements 16, welcher in der einen oder anderen Kippstellung (Fig. 3b bzw. 3c) druckbeaufschlagt wird. Bei dieser bevorzugten Ausführungsform ist die radiale Dichtkraft, mit welcher die Dichtkante 16a an die Laufbahn 12 angedrückt wird, wegen des langen Hebelarms bis zur Stützkante 26 bzw. 28 etwas geringer als bei der Ausführungsform nach Fig. 2, obwohl ein größerer Anteil der Basisfläche des Dichtelements 16 druckbeaufschlagt ist.

Eine weitere Besonderheit der Ausführungsform nach Fig. 3 besteht darin, daß die beiden am Übergang zwischen der Basisfläche und den Seitenflächen des Dichtelements 16 gebildeten Stützkanten 26 und 28 ballig ausgebildet sind. Ferner ist die der Basisfläche zugewandte Stützfläche am Kolbenscheitel mit mehreren in Umfangsrichtung verlaufenden Ausnehmungen 30 versehen, durch die das Medium unter die Basisfläche des Dichtelements 16 strömen kann. Die Abdichtung erfolgt auch bei dieser Ausführungsform zwischen benachbarten Seitenflächen der Leiste 14b einerseits und der Ausnehmung 22 in der Basisfläche des Dichtelements 16 andererseits, während die Abstützung an einer der Stützkanten 26, 28 erfolgt.

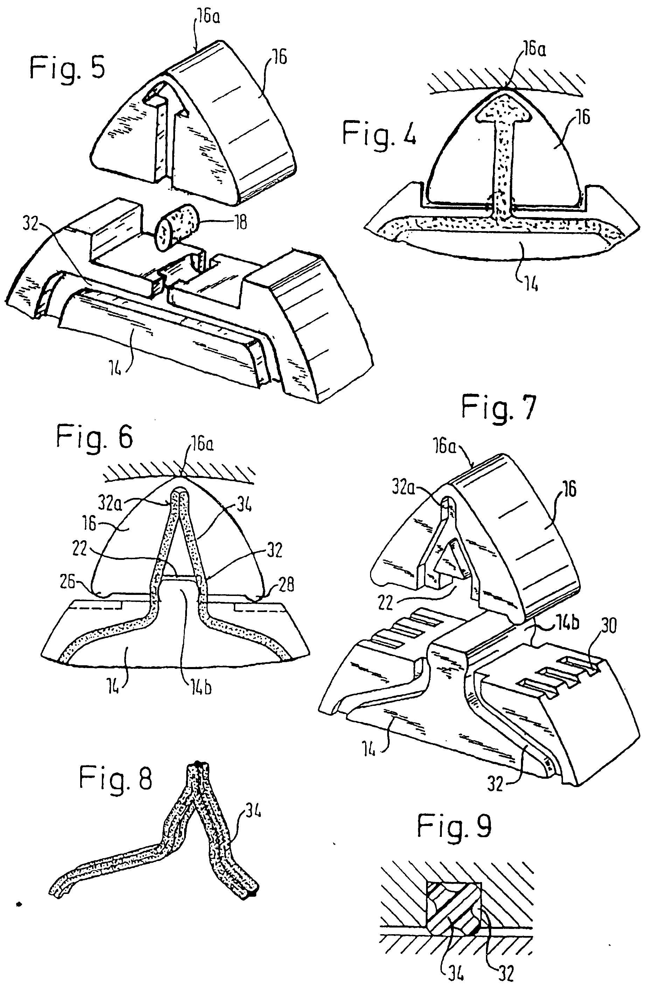

Während die Figuren 1 bis 3 nur den radialen Teil der Dichteinrichtung zeigen, ist in den Figuren 4 bis 9 auch die axiale Aodichtung des Kolbens 14 gezeigt.

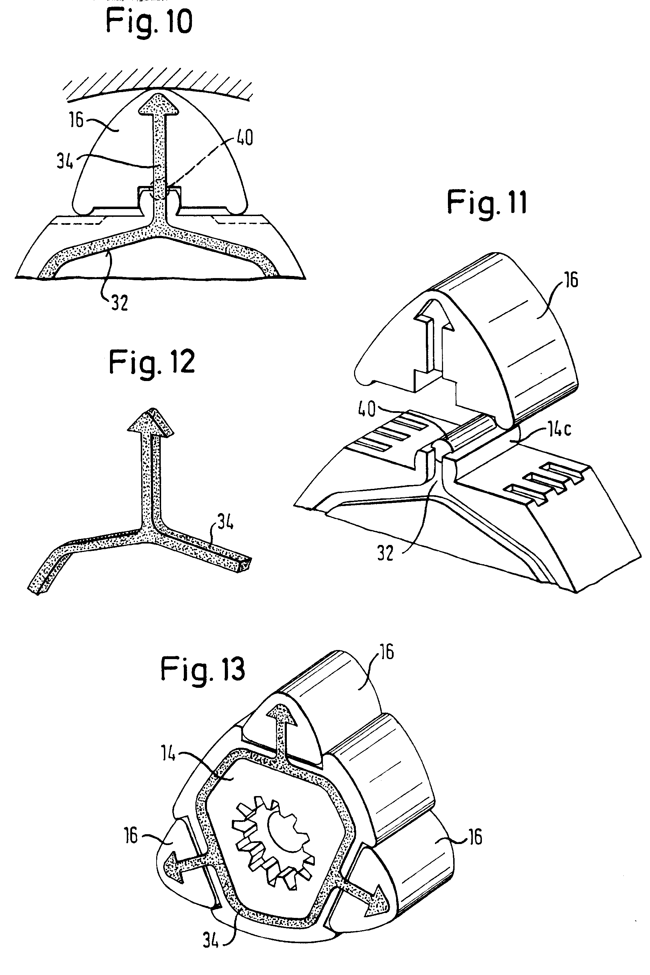

Entlang dem Außenumfang des Kolbens 14 und des Kolbenscheitels erstreckt sich auf seinen Stirnflächen jeweils eine Nut 32, die sich in der Mitte des Kolbenscheitels radial nach außen erstreckend, bis in die Stirnfläche des Dichtelements 16 hinein fortgesetzt ist und dort eine Verlängerung 32a bis nahezu an die Dichtkante 16a heran aufweist. In die Nut 32 und ihre Verlängerung 32a ist eine durchgehende Profildichtung 34 eingelegt. Die Profildichtung 34 kann die in Fig. 4 oder in Fig. 12 gezeigte Form oder auch die in Fig. 9 gezeigte Querschnittsform eines sogenannten Quad-Rings aufweisen. Sie besteht aus einem dauerhaft elastischen Material, das auch innerhalb einer großen Temperaturschwankungsbreite für eine gute axiale Abdichtung des Kolbens 14 sorgt.

Bei der Ausführungsform nach den Figuren 4 und 5 erstreckt sich die Nut 32 - und folglich die Dichtung 34 - durch die Mitte der Basisfläche des Dichtelements 16, also durch dessen Kipplager, das durch den zylindrischen Lagerkörper 18 gebildet ist. Die Nuten des Lagerkörpers 18 im Kolbenscheitel und in der Basisfläche erstrecken sich in axialer Richtung bis zur Nut 32.

Eine ähnliche Ausbildung, jedoch ohne zylindrischen Lagerkörper 18, zeigen die Figuren 6 und 7, wobei jedoch die Nut 32 mit der Dichtung 34 nicht längs der Mitte der Basisfläche, sondern durch den Bereich der Seitenflächen der Ausnehmung 22 in der Basisfläche des Dichtelements 16 verläuft. An dieser Stelle sind die Relativbewegungen zwischen dem Dichtelement 16 und dem Kolben 14 geringer als an den außenliegenden Stützkanten 26 und 28. Die Beweglichkeit des Dichtelements 16 ist dabei ebenfalls sehr hoch, indem in der Verlängerung 32a der Nut 32 zwei Enden der Profildichtung ohne Verbindung dazwischen übereinanderliegen. Zusätzlich weist der Kolbenscheitel noch Ausnehmungen 30 auf, die die Oberfläche des Kolbenscheitels unterbrechen, auf welcher sich die balligen Stützkanten 26, 28 in der Kippstellung abstützen. Die Kippbewegung des Dichtelements 16 wird daher durch die Dichtung 34 nicht beeinträchtigt.

Die in den Figuren 9 bis 12 gezeigte Ausführungsform des Dichtelements 16 stellt eine Kombination der Ausführungsformen nach den Figuren 1 und 4 bis 9 dar, wobei aber der Kolbenscheitel abweichend von der Ausführungsform nach den Figuren 4 und 5 keine Ausnehmung aufweist. Das Dichtelement 16 ist vielmehr ähnlich der Ausführungsform nach den Figuren 6 bis 9, auf eine radial nach außen vorstehende Leiste 14c aufgesetzt, die sich in eine entsprechende axiale Ausnehmung in der Basisfläche des Kolbens 14 erstreckt. Die radial nach außen weisende Fläche der Leiste 14c ist, wie die Oberfläche des Kolbenscheitels gemäß der Ausführungsform nach Figur 5, mit einer Nut versehen, in die ein zylindrischer, elastischer Lagerkörper 40 eingelegt ist, der einerseits die Kippachse definiert und andererseits für eine Dichtwirkung in Umfangsrichtung sorgt. Stirnseitig ist eine Profildichtung 34 vorgesehen, die sich in eine entsprechende Nut 32 erstreckt.

Alternativ erstreckt sich die Profildichtung 34 auch über die gesamte axiale Breite des Kolbens 14 und des Dichtelements 16, so daß ein gesonderter Lagerkörper 40 entfällt.

Figur 13 zeigt den gesamten Kolben 14 mit drei Dichtelementen 16 und der durchgehenden Profildichtung 34.

Vorzugsweise teilt das Lagerelement die Basisfläche des Dichtelements 16 in Teilflächen von maximal 45 % der gesamten Basisfläche, so daß die durch die bei Druckbeaufschlagung erzeugte, radial nach außen gerichtete Kraft nicht zu groß wird.

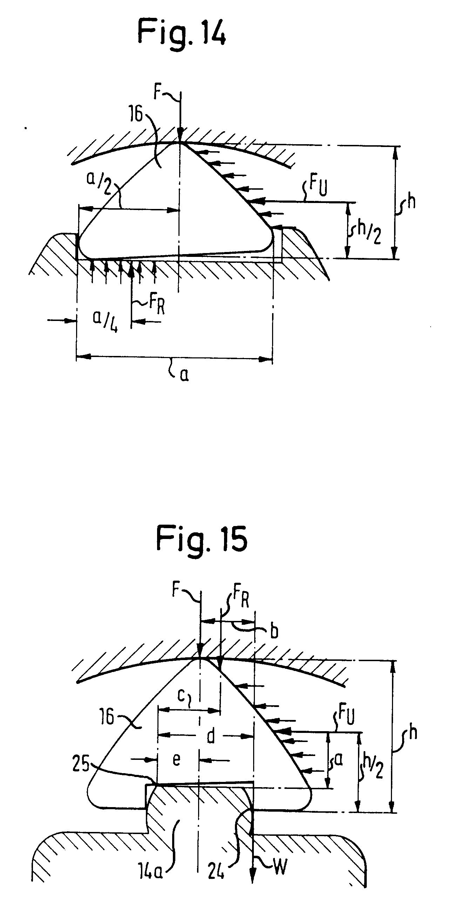

Im folgenden wird anhand der Figuren 14 und 15 mittels einer Überschlagsrechnung kurz erläutert, wie sich die Normalkräfte, die durch ein Dichtelement nach der Erfindung und durch ein Dichtelement ohne Aufteilung seiner Basisfläche erzeugt werden, zusammensetzen und wie sie sich voneinander unterscheiden.

Für beide einander gegenübergestellten Dichtelemente sollen gleiche äußere Abmaße angenommen werden:

Breite des Dichtelements in Umfangsrichtung a = 30 mm,

Höhe des Dichtelements h = 20 mm.
Breite des Dichtelements B = 14 mm;
Gasdruck p bei Druckbeaufschlagung = 220 bar betragen.

Die auf das Dichtelement wirkenden Kräfte können in zwei Komponenten aufgeteilt werden, nämlich eine Umfangskraft $F_U$ und eine Kraftkomponente $F_R$ senkrecht dazu, also in Radialrichtung. Ermittelt werden soll für beide Dichtelemente die erzeugte Normalkraft N an der Dichtkante.

In beiden Figuren ist die rechte Seitenfläche des Dichtelements 16 druckbeaufschlagt gezeigt, wobei das Dichtelement 16 jeweils maximal entgegen dem Uhrzeigersinn gekippt ist.

Kräfte beim Dichtelement gemäß Figur 14

$$F_U = h \times B \times p = 6160 \text{ N}$$

$$F_R = a/2 \times B \times p = 4620 \text{ N}$$

Zur Erzeugung der Radialkraft $F_R$ steht nur die halbe, nämlich die linke Hälfte der Basisfläche zur Verfügung, da die durch die rechte Hälfte der Basisfläche erzeugte radial nach außen gerichtete Kraft durch eine entsprechende, entgegengesetzt wirkende Kraft neutralisiert wird, die an der rechten Seitenfläche des Dichtelements 16 erzeugt wird. Die Kraft F läßt sich durch ein Momentengleichgewicht um die linke Stützkante folgendermaßen berechnen.

$$F = \frac{F_U \times h/2 + F_R \times a/4}{a/2} = 8470 \text{ N}$$

Kräfte beim Dichtelement gemäß Figur 15

Das in Figur 15 gezeigte Dichtelement 16 liegt einerseits an der Linie 24 und andererseits an der Stützlinie 25 auf, wobei die Kippbewegung um die Linie 25 erfolgt. Folgende Maße werden der Berechnung zugrunde gelegt:

Radialer Abstand a der Kraft $F_U$ von der Linie 25 = 17 mm. Halbe Breite b der Leiste 14a (seitlicher Abstand der Linie 24, an der eine Reibungskraft W erzeugt wird, von der Mitte der Leiste) = 9 mm.
Seitlicher Abstand c der radialen Kraft $F_R$ von der Linie 25 = 12,5 mm.
Abstand d der Reibungskraft W von der Linie 25 = 17 mm.
Abstand e der Normalkraft F von der Linie 25 = 8 mm.
Reibungsfaktor $\mu = 0,15$.

$$F_U = h \times B \times p = 6160 \text{ N}$$

$$F_R = b \times B \times p = 2770 \text{ N}$$

$$W = 0{,}15 \times 6160 = 920 \text{ N}$$

Damit ergibt sich die Normalkraft F zu

$$F = \frac{F_U \times a - (W \times d + F_R \times c)}{e} = 6800 \text{ H}$$

Aus diesem Vergleich läßt sich ersehen, daß die durch das Dichtelement 16 gemäß Figur 5 erzeugte Normalkraft deutlich geringer ist als die bei dem bekannten Dichtelement erzeugte Normalkraft. Durch unterschiedliche geometrische Ausbildungen der Leisten 14a, 14b, 14c (insbesondere Änderung der Kippachse und der Breite der Leiste) läßt sich die für die Dichtwirkung entscheidende Normalkraft F beliebig einstellen.

Bei allen Ausführungsformen kann in die radial äußere Kante des Dichtelements 16 eine (nicht gezeigte) Dichtleiste aus einem geeigneten Material eingelassen sein.

## Patentansprüche

1. Dichteinrichtung am Kolben (14) eines Kreiskolbenantriebs für Gurtstraffer, mit einem in Umfangsrichtung kippbeweglich an jedem Kolbenscheitel angebrachten Dichtelement (16), das sich axial über die Breite des Kolbens (14) erstreckt, mit seiner radial äußeren Dichtkante (16a) am Gehäuse (10) des Kreiskolbenantriebs anliegt und auf seiner der Dichtkante (16a) gegenüberliegenden Seite eine Basisfläche aufweist, dadurch gekennzeichnet, daß das Dichtelement (16) am Kolbenscheitel auf einem axial über diesen verlaufenden, die Basisfläche des Dichtelements (16) teilenden sowie zwischen der Basisfläche und dem Kolbenscheitel abdichtenden Lagerelement (18, 14a; 14b) gelagert ist.

2. Dichteinrichtung nach Anspruch 1, dadurch gekennzeichnet, daß das Lagerelement durch einen insbesondere zylindrischen Lagerkörper (18) gebildet ist.

3. Dichteinrichtung nach Anspruch 2, dadurch gekennzeichnet, daß der Lagerkörper (18) aus gummielastischem Material besteht.

4. Dichteinrichtung nach einem der Ansprüche 1 bis 3, dadurch gekennzeichnet, daß die Kippstellung des Dichtelements (16) jeweils durch Abstützung einer beidseits der Dichtkante (16a) am Übergang zwischen seinen Seitenflächen und der Basisfläche gebildeten Stützkante (26, 28) am Kolbenscheitel definiert ist.

5. Dichteinrichtung nach Anspruch 4, dadurch gekennzeichnet, daß die Stützkanten (26, 28) ballig ausgebildet sind und sich in der Kippstellung des Dichtelements (16) auf einer durch in Umfangsrichtung verlaufende Ausnehmungen (30) unterbrochenen Stützfläche am Kolbenschenkel abstützen.

6. Dichteinrichtung nach Anspruch 1, dadurch gekennzeichnet, daß das Lagerelement durch eine Leiste (14a, 14b) gebildet ist.

7. Dichteinrichtung nach Anspruch 6, dadurch gekennzeichnet, daß die Leiste (14a, 14b) in eine Ausnehmung (22) in der Basisfläche des Dichtelements (16) eingreift.

8. Dichteinrichtung nach Anspruch 6 oder 7, dadurch gekennzeichnet, daß das Dichtelement (16) zwei in Umfangsrichtung beabstandete Dichtflächen aufweist, von denen je nach Kipprichtung des Dichtelements (16) in der Kippstellung die eine oder die andere mit der Leiste (14a, 14b) dichtend in Eingriff kommt.

9. Dichteinrichtung nach einem der vorstehenden Ansprüche, dadurch gekennzeichnet, daß in den Stirnflächen des Kolbens (14) eines Aufnahmenut (32) für eine elastische Axialdichtung (34) angebracht ist und sich diese Aufnahmenut (32) in das Dichtelement (16) hinein fortsetzt.

10. Dichteinrichtung nach Anspruch 9, dadurch gekennzeichnet, daß die Axialdichtung (34) durchgehend von der Aufnahmenut (32) in den Stirnflächen des Kolbens (14) in die Aufnahmenut (32a) des Dichtelements (16) verläuft.

## Claims

1. A sealing means on a piston (14) of a rotary piston drive for belt tensioners, comprising a sealing element (16) arranged on each piston apex so as to be capable of performing a tilting movement in circumferential direction, the sealing element extending axially across the width of the piston (14), engaging the housing (10) of the rotary piston drive at its radially outer sealing edge (16a) and having a bottom face on its side opposite the sealing edge (16a), characterized in that the sealing element (16) is mounted on the piston apex on a mounting element (18, 14a; 14b) extending axially across the piston apex and dividing the bottom face of the sealing element (16), and establishing a seal between the bottom face and the piston apex.

2. The sealing means according to claim 1, characterized in that the mounting element is formed by a, in particular cylindrical, mounting body (18).

3. The sealing means according to claim 2, characterized in that the mounting body (18) consists of rubber-elastic material.

4. The sealing means according to any of the claims 1 to 3, characterized in that each tilted position of the sealing element (16) is defined by abutment of a supporting edge (26, 28) on the piston apex, which supporting edge is formed on both sides of the sealing edge (16a) at the transition between the side faces of the sealing element and the bottom face.

5. The sealing means according to claim 4, characterized in that the supporting edges (26, 28) are formed so as to be crowned, and, in the tilted position of the sealing element (16), they are supported on the piston apex by a supporting face interrupted by recesses (30) extending in circumferential direction.

6. The sealing means according to claim 1, characterized in that the mounting element is formed by a ledge (14a, 14b).

7. The sealing means according to claim 6, characterized in that the ledge (14a, 14b) engages a recess (22) in the bottom face of the sealing element (16).

8. The sealing means according to claim 6 or 7, characterized in that the sealing element (16) comprises two sealing faces spaced in circumferential direction, of which sealing faces, depending on the tilting direction of the sealing element (16) in the tilted position, the one or the other sealingly comes into engagement with the ledge (14a, 14b).

9. The sealing means according to any of the preceding claims, characterized in that a receiving groove (32) for a resilient axial seal (34) is arranged in the end faces of the piston (14), this receiving groove (32) continuing into the sealing element (16).

10. The sealing means according to claim 9, characterized in that the axial seal (34) extends continuously from the receiving groove (32) in the end faces of the piston (14) into the receiving groove (32a) of the sealing element (16).

**Revendications**

1. Dispositif d'étanchéité au niveau du piston (14) d'un dispositif de commande à piston rotatif pour tendeur de ceinture, comprenant un élément d'étanchéité (16), monté sur chaque sommet de piston de manière à basculer dans le sens périphérique, lequel élément d'étanchéité s'étend dans le sens axial sur la largeur du piston (14), vient en contact avec sa crête d'étanchéité (16a) extérieure dans le sens radial contre le boîtier (10) du dispositif de commande à piston rotatif et est muni d'une surface de base sur son côté opposé à la crête d'étanchéité (16a), caractérisé en ce que l'élément d'étanchéité (16) est logé au sommet du piston, sur un élément de support (18, 14a ; 14b) qui s'étend dans le sens axial sur ledit sommet du piston, divise la surface de base de l'élément d'étanchéité (16) et assure l'étanchéité entre la surface de base et le sommet du piston.

2. Dispositif d'étanchéité selon la revendication 1, caractérisé en ce que l'élément de support est formé par un corps de support (18), en particulier de forme cylindrique.

3. Dispositif d'étanchéité selon la revendication 2, caractérisé en ce que le corps de support (18) est réalisé dans un matériau caoutchouteux élastique.

4. Dispositif d'étanchéité selon l'une quelconque des revendications 1 à 3, caractérisé en ce que la position de basculement de l'élément d'étanchéité (16) est toujours définie par la mise en appui d'un bord d'appui (26, 28) contre le sommet du piston, lequel bord d'appui est formé de part et d'autre de la crête d'étanchéité (16a) dans la zone de transition entre ses surfaces latérales et sa surface de base.

5. Dispositif d'étanchéité selon la revendication 4, caractérisé en ce que les bords d'appui (26, 28) présentent une forme convexe et viennent en appui, dans la position de basculement de l'élément d'étanchéité (16), contre une surface d'appui de la tige du piston interrompue par des évidements (30) réalisés dans le sens périphérique.

6. Dispositif d'étanchéité selon la revendication 1, caractérisé en ce que l'élément de support est formé par une nervure de renforcement (14a, 14b).

7. Dispositif d'étanchéité selon la revendication 6, caractérisé en ce que la nervure de renforcement (14a, 14b) entre en prise avec un évidement (22) réalisé dans la surface de base de l'élément d'étanchéité (16).

8. Dispositif d'étanchéité selon la revendication 6 ou 7, caractérisé en ce que l'élément d'étanchéité (16) est muni de deux surfaces d'étanchéité écartées l'une de l'autre dans le sens périphérique, parmi lesquelles, en fonction du sens de basculement de l'élément d'étanchéité (16), l'une ou l'autre, dans la position de basculement, vient en prise de manière étanche avec la nervure de renforcement (14a, 14b).

9.  Dispositif d'étanchéité selon l'une quelconque des revendications précédentes, caractérisé en ce qu'une rainure de réception (32) est réalisée dans les surfaces frontales du piston (14) pour recevoir un joint d'étanchéité axial élastique (34) et ladite rainure de réception (32) se prolonge à l'intérieur de l'élément d'étanchéité (16).

10. Dispositif d'étanchéité selon la revendication 9, caractérisé en ce que le joint d'étanchéité axial (34) s'étend en continu depuis la rainure de réception (32) réalisée dans les surfaces frontales du piston (14) vers la rainure de réception (32a) réalisée dans l'élément d'étanchéité (16).

## Fig. 1

a)  b)  c)

## Fig. 2

a)  b)  c)

## Fig. 3

a)  b)  c)

Fig. 5

Fig. 4

Fig. 6

Fig. 7

Fig. 8

Fig. 9

# Fig. 10

# Fig. 11

# Fig. 12

# Fig. 13

# Fig. 14

# Fig. 15